# EUROPEAN PATENT SPECIFICATION

(11) **EP 2 290 164 B1**
(45) Date of publication and mention of the grant of the patent: **25.04.2012**
(21) Application number: 09010005.8
(22) Date of filing: 03.08.2009
(51) Int. Cl.: E04B 1/76, C03B 37/04, D04H 13/00

(54) **Insulation material**
Isoliermaterial
Matériau d'isolation

(43) Date of publication of application: 02.03.2011
(73) Proprietor: Knauf Insulation GmbH, 9586 Fürnitz (AT)
(72) Inventor: Preininger, Reinhard, Dr., 9580 Villach-Drobollach (AT)
(74) Representative: Müller-Boré & Partner Patentanwälte

(56) References cited:
- WO-A2-2004/099095
- GB-A- 2 069 876
- US-A- 4 268 294
- US-A- 4 504 544
- US-A- 4 759 974
- US-A- 5 866 486

## Description

The present invention relates to an insulation material comprising mineral fiber wool, as well as to a method for producing said insulation material.

Insulation materials are typically used in thermal and acoustic insulation e.g. in buildings, vehicles and technical installations, but may also be applied in applications regarding fire and impact insulation. For easy transport and handling, such insulation materials are usually in the form of a sheet-like fleece or a board.

Typical insulation fleeces or boards are made of a fibrous material such as polymeric materials or mineral wool. Due to the efficient insulation properties as well as the low production costs and environmental compatibility mineral wools such as glass fibers, ceramic fibers and rock wool are preferred materials for the manufacture of insulating materials.

Insulation materials on the basis of mineral fibers typically achieve good insulation properties for both thermal and acoustic applications. Said insulation properties are *inter alia* based on the microstructure of the material which in principle consists of a fiber framework and respective voids which are formed in between said fiber framework. For an efficient insulation, said microstructure is required to be highly uniform, i.e. the framework and the voids thereof should be evenly distributed throughout the fiber material and have a uniform range of size. However, even the most efficient insulation materials on a mineral fiber basis show unevenness in the microstructure.

However, said unevenness leads to a reduction in the material's insulation efficacy.

WO 2004/099095 A2 describes a mineral fiber-based heat- and/or sound-insulating product which is produced by means of internal centrifuging and drawing using a gas stream at a high temperature, and creping.

Document US 4 759 974 A discloses an insulation material having the features of the preamble of claim 1.

Accordingly, the technical problem underlying the present invention is to provide an insulation material on the basis of mineral fibers, which should have an optimized microstructure and highly improved insulation behaviour.

The above technical problem is solved by providing the embodiments characterized in the claims. The insulation material of the invention comprises a mineral fiber wool having an average fiber diameter in the range of 3 to 8 µm and a binder content of 0.1 to 10 wt.-%, the content of fibers in said mineral fiber wool having a length of less than 15 µm (i.e. the "shot content") being ≤ 1 wt.%, and said binder having an even distribution within the fiber framework and being mainly positioned on the intersections of individual fibers thereof, said binder having been applied in a highly regular and uniform manner, said insulation having a heat conductivity of less than 0.020 W/m·K.

The term "insulation material" as used herein is not specifically restricted and includes any mineral fiber based material as such or in form of a composite material which comprises a mineral fiber based material.

Moreover, herein the expressions "mineral wool" and "mineral fiber wool" are used synonymously and include any fiber wool which is made from natural or synthetic minerals or metal oxides, such as fiber glass, ceramic fibres and rock or stone wool. According to the present invention, the average fiber diameter of said mineral wool may for example be in the range of 3 to 8 µm, 3.5 to 7.5 µm, 4 to 7 µm or 4.5 to 7 µm.

Herein, the term "shot content" means the content of fibers in the mineral wool which have preferably a length of less than 15 µm.

Moreover, the insulation material of the present invention comprises a mineral wool having a shot content of ≤ 1 wt.-%, preferably of ≤ 0.8 wt.-%, more preferably of ≤ 0.5 wt.-% and even more preferably of ≤ 0.3 wt.-%. In addition, the insulation material of the present invention comprises a mineral wool having a heat conductivity of less than 0.020 W/m·K, preferably of less than 0.018 W/m·K, more preferably of less than 0.016 W/m·K, and even more preferably of less than 0.015 W/m·K.

According to the present invention, the above-defined insulation material has a binder content of 0.1 to 10 wt.-%. For example, the binder content may be in a range of 0.2 to 9 wt.-%, preferably in the range of 0.5 to 8 wt.-%, and more preferably in the range of 0.7 to 7 wt.-%. Further examples include a binder content in the range of 0.2 to 8 wt.-%, preferably in the range of 0.2 to 6 wt.-%, and more preferably in the range of 0.2 to 5 wt.-%.

The type of binder is not specifically restricted as long as it can be used in the manufacture of mineral fiber wool. Examples of said binders include formaldehyde based binders such as phenol formaldehyde, and formaldehyde-free binders such as Ecose™ binders.

In a preferred embodiment, the insulation material as defined above has a bulk density of 10 to 200 kg/m³. For example, the bulk density may be in the range of 20 to 180 kg/m³, in the range of 50 to 170 kg/m³, or in the range of 60 to 150 kg/m³. Further examples include bulk densities in the range of 50 to 200 kg/m³, in the range of 70 to 180 kg/m, or in the range of 100 to 160 kg/m³.

According to a further preferred embodiment of the above-defined insulation material, at least 75 wt.-% of the binder is located at positions where at least two fibres are in contact or at least in close proximity. In the improved insulation material of the present invention, the binder is mainly located at the intersection of the fibers forming the fiber framework. Such a specific distribution of the binder leads to significantly enhanced insulation values, since the binder is predominantly present at locations where fibers are to be connected and does not fill voids within the framework. Such a specific distribution of the binder can e.g. be achieved by applying a suitable amount thereof onto a highly uniform fiber matrix.

Another aspect of the present invention relates to a method for producing the insulation material of the invention, comprising the steps of
(a) providing a heating means,
(b) providing therein a raw material for a mineral fiber having an average particle diameter in the range of 50 to 120 mm,
(c) providing a steady energy supply, wherein the variation of said energy supply is controlled to be 5% or lower,
(d1) in case the mineral fiber is no glass fiber, transferring the molten material to a fiberizing apparatus, wherein the temperature of the molten material is controlled to be 1,450 ± 40°C, or
(d2) in case the mineral fiber is a glass fiber, transferring the molten material to a fiberizing apparatus, wherein the temperature of the molten material is controlled to be 1,075 ± 105°C,
(e) applying a binder to the fibers produced in the fiberizing apparatus,
(f) separating the binder treated fibers obtained from step e) from shots,
(g) collecting the resultant fibers on a collection grid, thus obtaining a primary fleece,
(h) arranging the primary fleece obtained in step g) on a conveyor belt to obtain a secondary fleece, and
(i) densifying the secondary fleece.

Herein, the term "heating means" is not specifically restricted and includes any means or device suitable for heating a mineral fiber raw material to a temperature above its melting point. Typical examples of heating means usable in the present invention include gas-, oil-, an electrically fired furnaces.

According to a preferred embodiment of the present invention, in the above-defined method the heating means provided under step (a) is a cupola furnace or an electric arc furnace.

In a specific embodiment of the above-defined method, the cupola furnace or the electric arc furnace are operated steadily with variations in feeding rate and/or temperature being 5% or lower. In order to obtain a highly uniform mineral fiber wool for an insulation material as defined above, the feeding rate and temperature of the heating means have to be controlled within a specific range. However, the deviations from the desired feeding rate and temperature have to be kept below 5%, preferably below 4 %, and more preferably below 3%, in order to obtain said uniform mineral fiber wool having the desired properties.

The above-mentioned temperature with only a low variation is *inter alia* achieved by providing a steady energy supply wherein the variation of said energy supply is controlled to be 5% or lower, preferably to be 4% or lower, and more preferably to be 3% and lower. According to a specific example, the variation of the energy supply is controlled to be 2% or lower. Such a low energy supply can for example be achieved by invariantly providing a fuel of constant amount and/or size. For example, in case coal is used as a fuel, the coal supply should be steady and the coal particles should be within a specific range of size, such as within a size of 80 to 120 mm in diameter. Similarly, in case air or oxygen is added, for example as a gas stream, the gas stream should be steady, i.e. without significant pressure deviation.

Herein, the term "feeding rate" means the amount of molten raw material released from the heating means for further procession.

The raw material to be provided under step (b) of the method as defined above is not specifically restricted in type and shape. For example, the raw material may be provided in cubic form, spherical form, or random form, and may further be a combination of two or more of such different forms. The raw material may also be provided as only one type of raw material, or may be provided as a mixture of different raw materials. However, in order to obtain a mineral wool having the above-mentioned advantageous properties, the raw material should be provided in form of particles having an average particle diameter in the range of 50 to 120 mm, or in the range of 80 to 120 mm, or in the range of 60 to 100 mm.

In general, the fibers are formed by transferring molten raw material to a fiberizing apparatus. According to a specific embodiment, in the method as defined above the fiberizing apparatus used in step (d) is a spinning machine, which is operated at 4,000 to 9,000 rounds per minute (rpm). For example, the spinning machine may be operated at 5,000 to 9,000, at 5,500 to 9,000, or at 6,000 to 9,000 rpm. However, further examples include spinning rates of 5,000 to 8,000, or 5,500 to 8,000, or 6,000 to 8,000 rpm.

For example, when using a spinning machine as a fiberizing apparatus, highly regular fibers may be obtained by aligning the surface of the spinning wheels of said spinning machine with respect to the stream of molten material.

Moreover, the temperature of the molten raw material directly influences the resulting mineral fiber's properties. Accordingly, in order to achieve the desirably improved insulation properties, the molten raw material, to be transferred to a fiberizing apparatus, is controlled to a specific narrow temperature range, which mainly depends on the type of raw material. For example, when producing a glass fiber mineral wool, the temperature is typically lower when compared to the production of a stone wool.

According to the present invention in case the mineral fiber is no glass fiber, the molten material is transferred to a fiberizing apparatus, wherein the temperature of said molten material is controlled to be 1,450 ± 40°C. In such a case, according to a further example of the present invention, the temperature of the molten material may be controlled to be 1,450 ± 30°C, or 1,450 ± 20°C.

Alternatively, in case the mineral fiber is a glass fiber, the molten material is transferred to a fiberizing apparatus, wherein the temperature of said molten material is controlled to be 1,075 ± 105°C. In such a case, according to a further example of the present invention, the temperature of the molten material may be controlled to be 1,075 ± 80°C, 1,075 ± 50°C, or 1075 ± 30°C.

A highly constant temperature of the molten material discharged from the heating means can for example be achieved by using a heating means with a short outlet nozzle.

The step of applying a binder in the above-defined method of the present invention is not specifically restricted and includes any technique by which a binder may be applied to mineral wool fibers. For example, the binder may be applied through the fiberizing apparatus, e.g. during the fiberizing process, or it may be applied onto the resultant fibers, e.g. by spraying a liquid binder or a binder solution thereon. However, in order to obtain an even binder distribution within the fiber framework, wherein the binder is mainly positioned on the intersections of individual fibers thereof, said binder should be applied in a highly regular and uniform manner.

According to the above-defined method, the binder treated fibers are separated from shots within the fiber network. Such a shot removal may be achieved e.g. by vacuum, high pressure, size exclusion and similar techniques. For example, the binder treated fibers may be collected in a vertical stack comprising an air separator, which is operated under reduced pressure. Thus, the heavier binder treated fibers may be collected on a collecting grate on the bottom of the stack, while the lighter shots are removed sideways through the air separator in order to be collected therein and thus to be removed. However, the step of shot removal is not limited thereto and may as well be carried out by other means which are suited to remove shots from the binder treated mineral fibers.

According to a specific embodiment of the above-defined method, the shots are removed in step (f) by applying air flow or low pressure to collect the shots in a separator.

According to the present invention, the binder treated fibers are collected to form a primary fleece which is then arranged on a conveyor belt to form a secondary fleece. In one embodiment of the above-defined method the primary fleece is collected in step (g) from the collection grid by two sprocket drums which are configured to turn in opposite directions.

In order to obtain a highly uniform distribution of voids within the mineral wool's framework, the secondary fleece is densified, e.g. by repeated compression under rolls. According to a specific embodiment of the present invention, in step (i) of the above-defined method the secondary fleece is densified by repeatedly passing said secondary fleece through rolls of increasing diameter while applying suction.

The binder treated fibers, such as in form of a shot-reduced secondary fleece, are heated in an oven for curing. For example, the curing temperature may be in the range of 200 to 250°C.

The insulation material of the present invention is highly effective in thermal and acoustic insulation. These advantageous properties are achieved through the highly uniform microstructure of the mineral wool comprised in said insulation material, which allows a better insulation when compared to general mineral fiber based insulation materials. Since the production of an insulation material according to the present invention can be carried out by high throughput processes, it is, in addition to the surprisingly improved properties, highly cost-effective. Furthermore, the resultant insulation material may be easily handled on the site of application, e.g. in form of bending or cutting. Moreover, the method for producing such an insulation material surprisingly enables the production of an insulation material having highly improved characteristics, particularly in respect to uniformity and the connected thermal and acoustic insulation properties. Accordingly, said method may be employed for an effective and safe manufacture of insulation materials which may be used e.g. in the construction of buildings, technical installations and vehicles.

## Claims

1. An insulation material, comprising a mineral fiber wool having an average fiber diameter in the range of 3 to 8 µm and a binder content of 0.1 to 10 wt.%, **characterized in that**
the content of fibers in said mineral fiber wool having a length of less than 15 µm is ≤ 1 wt.-%, and
**in that** said binder has an even distribution within the fiber framework and is mainly positioned on the intersections of individual fibers thereof, said binder having been applied in a highly regular and uniform manner, said insulation material having a heat conductivity of less than 0.020 W/m·K.

2. The insulation material according to claim 1, having a bulk density of 10 to 200 kg/m³.

3. The insulation material according to claim 1 or 2, wherein at least 75 wt.-% of the binder is located at positions where at least two fibers are in contact or at least in close proximity.

4. A method for producing an insulation material as defined in any of claims 1 to 3, comprising the steps of
(a) providing a heating means,
(b) providing therein a raw material for a mineral fiber having an average particle diameter in the range of 50 to 120 mm,
(c) providing a steady energy supply, wherein the variation of said energy supply is controlled to be 5% or lower,
(d1) in case the mineral fiber is no glass fiber, transferring the molten material to a fiberizing apparatus, wherein the temperature of the molten material is controlled to be 1,450 ± 40°C, or
(d2) in case the mineral fiber is a glass fiber, transferring the molten material to a fiberizing apparatus, wherein the temperature of the molten material is controlled to be 1,075 ± 105°C,
(e) applying a binder to the fibers produced in the fiberizing apparatus,
(f) separating the binder treated fibers obtained from step (e) from shots,
(g) collecting the resultant fibers on a collection grid, thus obtaining a primary fleece,
(h) arranging the primary fleece obtained in step (g) on a conveyor belt to obtain a secondary fleece, and
(i) densifying the secondary fleece.

5. The method according to claim 4, wherein the heating means provided under step (a) is a cupola furnace or an electric arc furnace.

6. The method according to claim 5, wherein the cupola furnace or the electric arc furnace are operated steadily with variations in feeding rate and/or temperature being 5% or lower.

7. The method according to any one of claims 4 to 6, wherein the fiberizing apparatus used in step (d) is a spinning machine, which is operated at 4,000 to 9,000 rpm.

8. The method according to any of claims 4 to 7, wherein the shots are removed in step (f) by applying air flow or low pressure to collect the shots in a separator.

9. The method according to any of claims 4 to 8, wherein the primary fleece is collected in step (g) from the collection grid by two sprocket drums which are configured to turn in opposite directions.

10. The method according to any of claims 4 to 9, wherein in step (i) the secondary fleece is densified by repeatedly passing said secondary fleece through rolls of increasing diameter while applying suction.

## Patentansprüche

1. Isoliermaterial, umfassend eine Mineralfaserwolle, die einen mittleren Faserdurchmesser im Bereich von 3 bis 8 µm und einen Bindemittelgehalt von 0,1 bis 10 Gew.-% aufweist,
**dadurch gekennzeichnet, dass**
der Gehalt an Fasern in der Mineralfaserwolle mit einer Länge von weniger als 15 µm ≤ 1 Gew.-% ist, und
**dadurch**, dass das Bindemittel eine gleichmäßige Verteilung innerhalb des Fasergerüsts aufweist und vorwiegend an den Schnittpunkten von einzelnen Fasern davon angeordnet ist, wobei das Bindemittel in einer hochgradig regelmäβigen und einheitlichen Weise eingebracht wurde, wobei das Isoliermaterial eine Wärmeleitfähigkeit von weniger als 0,020 W/m·K aufweist.

2. Isoliermaterial nach Anspruch 1, welches eine Rohdichte von 10 bis 200 kg/m³ aufweist.

3. Isoliermaterial nach Anspruch 1 oder 2, wobei mindestens 75 Gew.-% des Bindemittels an Positionen vorliegt, wo mindestens zwei Fasern in Kontakt oder zumindest in direkter Nähe sind.

4. Verfahren zur Herstellung eines Isoliermaterials, wie in einem der Ansprüche 1 bis 3 definiert, umfassend die Schritte
(a) das Bereitstellen eines Heizmittels,
(b) darin das Bereitstellen eines Rohmaterials für eine Mineralfaser, die einen mittleren Teilchendurchmesser in dem Bereich von 50 bis 120 mm aufweist,
(c) das Bereitstellen einer stetigen Energieversorgung, wobei die Variation der Energieversorgung gesteuert bzw. geregelt wird, um 5 % oder niedriger zu sein,
(d1) falls die Mineralfaser keine Glasfaser ist, das Überführen des geschmolzenen Materials in eine Vorrichtung zur Herstellung von Fasern, wobei die Temperatur des geschmolzenen Materials gesteuert bzw. geregelt wird, um 1450 ± 40 °C zu betragen, oder
(d2) falls die Mineralfaser eine Glasfaser ist, das Überführen des geschmolzenen Materials in eine Vorrichtung zur Herstellung von Fasern, wobei die Temperatur des geschmolzenen Materials gesteuert bzw. geregelt wird, um 1075 ± 105 °C zu betragen,
(e) das Aufbringen eines Bindemittels auf die Fasern, hergestellt in der Vorrichtung zur Herstellung von Fasern,
(f) das Trennen der Bindemittel-behandelten Fasern, erhalten aus Schritt (e) von Perlen (shots),
(g) das Sammeln der resultierenden Fasern auf einem Sammelgitter, wodurch ein Primärvlies erhalten wird,
(h) das Anordnen des Primärvlies, erhalten in Schritt (g), auf einem Förderband, um ein Sekundärvlies zu erhalten, und
(i) das Verdichten des Sekundärvlies.

5. Verfahren nach Anspruch 4, wobei das unter Schritt (a) bereitgestellte Heizmittel ein Schachtofen oder ein elektrischer Lichtbogenofen ist.

6. Verfahren nach Anspruch 5, wobei der Schachtofen oder der elektrische Lichtbogenofen stetig betrieben wird, mit Variationen der Zuführgeschwindigkeit und/oder Temperatur, die 5 % oder niedriger sind.

7. Verfahren nach einem der Ansprüche 4 bis 6, wobei die Vorrichtung zur Herstellung von Fasern, die in Schritt (d) verwendet wird, eine Spinnmaschine ist, die bei 4000 bis 9000 UpM betrieben wird.

8. Verfahren nach einem der Ansprüche 4 bis 7, wobei die Perlen in Schritt (f) durch Anwenden von Luftstrom oder Unterdruck entfernt werden, um die Perlen in einem Abscheider zu sammeln.

9. Verfahren nach einem der Ansprüche 4 bis 8, wobei das Primärvlies in Schritt (g) von dem Sammelgitter durch zwei Zahntrommeln gesammelt wird, die eingerichtet sind, sich in entgegengesetzte Richtungen zu drehen.

10. Verfahren nach einem der Ansprüche 4 bis 9, wobei in Schritt (i) das Sekundärvlies durch das wiederholte Durchlaufen des Sekundärvlies durch Walzen mit steigendem Durchmesser verdichtet wird, wobei Unterdruck angewandt wird.

## Revendications

1. Un matériau d'isolation, comprenant une laine de fibre minérale ayant un diamètre moyen de fibre dans la gamme de 3 à 8 µm et une teneur en liant de 0,1 à 10 % par poids,
**caractérisé en ce que**
la teneur en fibres dans ladite laine de fibre minérale ayant une longueur de moins de 15 µm est ≤ 1 % par poids, et
**en ce que** ledit liant a une répartition uniforme dans le cadre de fibre et est principalement positionné sur les intersections des fibres individuelles de celui-ci, ledit liant ayant été appliqué de manière très régulière et uniforme, ledit matériau d'isolation ayant une conductivité thermique de moins de 0,020 W/m K.

2. Le matériau d'isolation selon la revendication 1, ayant une densité de 10 à 200 kg/m³.

3. Le matériau d'isolation selon la revendication 1 ou 2, dans lequel au moins 75% par poids du liant se trouve aux positions où au moins deux fibres sont en contact ou au moins à proximité immédiate.

4. Une méthode de production d'un matériau d'isolation comme défini selon l'une quelconque des revendications 1 à 3, comprenant les étapes de
(a) fournir un moyen de chauffage,
(b) fournir à l'intérieur une matière première pour une fibre minérale ayant un diamètre moyen des particules dans la gamme de 50 à 120 mm,
(c) fournir un approvisionnement énergétique stable, dans lequel la variation dudit approvisionnement énergétique est contrôlée pour être de 5% ou moins,
(d1) transférer le matériau fondu à un appareil de fibrage, dans lequel la température du matériau fondu est contrôlée pour être de 1,450 +/- 40°C, dans le cas où la fibre minérale n'est pas de fibre de verre, ou
(d2) transférer le matériau fondu à un appareil de fibrage, dans lequel la température du matériau fondu est contrôlée pour être de 1,075 +/- 105°C, dans le cas où la fibre minérale est de fibre de verre
(e) appliquer un liant aux fibres produites dans l'appareil de fibrage,
(f) séparer les fibres traitées du liant obtenues à l'étape (e) des particules,
(g) recueillir les fibres obtenues sur une grille de collecte, obtenant ainsi un matelas primaire,
(h) disposer le matelas primaire obtenu à l'étape (g) sur une bande transporteuse pour obtenir un matelas secondaire, et
(i) densifier le matelas secondaire.

5. La méthode selon la revendication 4, dans laquelle les moyens de chauffage fournis à l'étape (a) sont un cubilot ou un four à arc électrique.

6. La méthode selon la revendication 5, dans laquelle le cubilot ou le four à arc électrique fonctionnent de manière constante avec des variations de taux d'alimentation et/ou de température étant de 5% ou inférieures.

7. La méthode selon l'une quelconque des revendications 4 à 6, dans laquelle l'appareil de fibrage utilisé dans l'étape (d) est une machine à filer, qui est exploitée à 4.000 à 9.000 rpm.

8. La méthode selon l'une quelconque des revendications 4 à 7, dans laquelle les particules sont enlevées à l'étape (f) par l'application d'un flux d'air ou d'une pression faible pour recueillir les coups dans un séparateur.

9. La méthode selon l'une quelconque des revendications 4 à 8, dans laquelle le matelas primaire est collecté à l'étape (g) par la grille de collecte par deux tambours à roues à pignons qui sont configurés pour tourner dans des directions opposées.

10. La méthode selon l'une quelconque des revendications 4 à 9, dans laquelle dans l'étape (i) le matelas secondaire est densifié par le passage répété dudit matelas secondaire à travers des rouleaux de diamètre croissant tout en appliquant une aspiration.
